# EUROPEAN PATENT SPECIFICATION

(11) **EP 4 289 714 B1**
(45) Date of publication and mention of the grant of the patent: **16.10.2024**
(21) Application number: 22177487.0
(22) Date of filing: 07.06.2022
(51) Int. Cl.: B62M 1/28, B62M 1/30, B62K 3/00

(54) **SCOOTER**
ROLLER
SCOOTER

(43) Date of publication of application: 13.12.2023
(73) Proprietor: Tuleap S.L., 08006 Barcelona (ES)
(72) Inventor: GAMIAO, Ian, Oxford, OX2 9BZ (GB); LINDNER, Frank, 65795 Hattersheim (DE)
(74) Representative: Ziebig Hengelhaupt Intellectual Property Attorneys Patentanwaltskanzlei PartGmbB

(56) References cited:
- WO-A1-2014/096470
- FR-A3- 2 957 892

## Description

The present invention concerns a scooter, in detail according to the independent claim.

Scooters, like kick scooters, also referred to as a push-scooters are well known from the state of the art. Such a scooter is a normally human-powered stand-up street vehicle with a handlebar, deck, and wheels propelled by a user pushing off the ground with their leg.

Also motorized scooters are known. Such stand-up scooters are powered (mainly in the past) by a small utility internal combustion engine. Recently, electric kick scooters (e-scooters) have grown in popularity with the introduction of scooter-sharing systems that use apps allowing users to rent the scooters by the minute. Thereby, these e-scooters are driven by a small electric motor directly built in the front or the rear wheel (hub motor). These scooters have a rechargeable battery to power the motor. If the battery runs out, the scooter can still be propelled by foot.

Classified as a form of micromobility, the above said scooters are generally designed with a large deck in the center on which the user stands. The deck may be supported by a frame of the scooter.

The present invention concerns the above scooters.

However, the known kick-driven scooters require the user to place one leg on the ground to push off in order to gain momentum and propel the scooter. To do this, the user must shift his balance to the side from which he pushes off. Such, the user takes one leg off the deck and places it on the ground. He must therefore lean out of the centre of the scooter and thus his centre of mass is just outside a vertical longitudinal centre plane of the scooter. Users with balance problems are therefore reluctant to use this type of scooter as they may lose control of it due to the shift in balance and fall off it.

Further, travelling longer distances on such a conventional kick scooter can be particularly tiring for the user. This is because the user has to change the leg with which they push off more often.

Scooters with the features known from the preamble of the independent claim are known from WO 2014/096470 A1 and FR 2 957 892 A3.

It is therefore the object of the invention to provide a scooter that is improved over the prior art. In particular, a scooter is to be provided which enables more comfortable, less tiring and safer use, even over longer periods or distances than conventional kick scooters.

The object is solved by a scooter, according to the independent claim. The dependent claims describe particularly useful embodiments of the invention.

According to the invention, a scooter comprises a frame, at least two wheels rotatably mounted to the frame and two drive levers arranged adjacent to each other, the drive levers being rotatably connected with their one end to the frame such that the other end of the respective drive lever may perform a reciprocating to- and fro-movement around its one end, a transmission which is connected to the at least one wheel in order to drive it rotationally, wherein a pulley is associated with each drive lever, around which pulley a pulling means like a rope, cable or belt is wound and which pulling means in turn is connected with the respective drive lever and with the transmission such that by actuating at least one of the drive levers at least in the fro-direction, the movement of the drive lever being transmitted by its respective pulling means via its respective pulley to the transmission and being converted into a rotational movement of the at least one wheel in driving direction of the scooter. In other words, the drive levers perform a swivelling movement around their one end with which they are rotatably connected to the frame while this swivelling movement - at least that one in the fro-direction, or even in both to- and fro-direction - is converted into a rotary movement at the transmission.

A scooter in the sense of the present invention is an at least human-powered stand-up street vehicle, which has at least two wheels, but may have more than this, thus being a trike or quad. When it is propelled by human power, this is done by the use of the two drive levers, which do not provide a continuous rotating movement but a reciprocating swivelling to- and fro-movement. In other words, these down (fro-) and up (to-) movement corresponds only to a partial circular movement. One could also say that this is an angle-limited up-and-down or back-and-forth pivoting movement. Simply put, the drive levers do not make a full rotation (360°). Angle-limited therefore means that the angle that the drive levers limit together in the maximum position of the to-movement and the maximum position of the fro-movement does not correspond to more than 180°, preferably not more than 120° and particularly preferably not more than 90° and most preferably the angle is between 10° and 45°.

Thereby, the drive levers may be configured as foot pedal levers such that by actuating the at least one drive lever by foot in the fro-direction, e.g. by stepping it down, the downward movement of the drive lever is transferred by the pulling means, the pulley and the transmission to the at least one wheel in order to drive it in driving direction of the scooter. The pedals thus function like a stepper (sports equipment). To propel the scooter, the user walks on the spot and thus operates the pedals alternately. As with a natural human gait, the balance remains in the vertical plane of the scooter or it only shifts slightly to the side when the user shifts the balance from one leg to the other. This means that people with balance problems can also use the scooter very well without having to put one leg to the bottom on which the scooter drives while driving it. The user stands symmetrical on the scooter, one foot on each pedal (not one foot before the other foot). At the same time, the angle-limited ergonomic operation of the drive levers or pedals allows for less fatigue as compared to a purely mechanically driven kick scooter and safer use, even over longer distances, which can also be achieved thanks to the pulling means.

One end of the pulling means may be connected to the respective drive lever and the other end to the pulley, the pulley being connectable to an input shaft of the transmission. This way, an optimal power transmission from the drive levers to the transmission can be achieved.

Preferably, each pulley may be configured such that around each pulley the respective pulling means can be wound and each pulley being associated with a freewheel clutch and a retractor, the retractor comprising a return spring, wherein each pulley being connectable via the respective freewheel clutch to an input shaft of the transmission, the retractor and the freewheel clutch being configured such that during the fro-movement of the respective drive lever, the pulling means can be unwound from the pulley, thereby tensioning the return spring of the retractor and engaging the freewheel clutch such that drive power from the drive lever may be transmitted by the pulling means, the pulley and the engaged freewheel clutch to an input shaft of the transmission, wherein during a to-movement of the drive lever, the freewheel clutch being disengaged such that the pulley freewheels in respect to the input shaft of the transmission such that no drive power can be transmitted from the pulley to the input shaft and the pulling means being wound back around the pulley by the pretensioned return spring of the retractor. The winding back takes place in a rotational direction opposite to the direction when uncoiling the pulling means from the pulley. In other words, the pulley, the retractor and the freewheel clutch may be configured each in the manner of a rope starter of an internal combustion engine. In this way, a particularly compact and therefore small power transmission from the pulling means to the transmission can be achieved.

Thereby, each pulley may be coupled by the respective freewheel clutch to a respective end of the input shaft of the transmission such that the both drive levers may be actuated independently from each other - and even in independent angles - wherein preferably the retractor, the freewheel clutch and the respective pulley are arranged concentrically to each other and to the input shaft. This means that users with restricted mobility or physical disability e.g. on only one leg can also use the scooter, as each drive lever pedal can be operated independently to propel the scooter. Even more, the pedals can be depressed to different degrees (which means different maximum positions of the to-movement and the maximum position of the fro-movement) independent of each other.

The freewheel clutch ensures that power from the drive lever or pedal can only be transferred in one turning direction of the transmission, in detail of its input shaft. In other words, the freewheel clutch acts as a directional lock, allowing power or torque to be transmitted only in one direction, e.g. the fro-direction - or stepping down direction in the case of a pedal - and not in the opposite direction, the to-direction - or stepping up direction.

A drive lever return spring may be associated to each drive lever, which spring may be connected with its one end to the frame of the scooter and with its other end to the drive lever in order to ensure a restoring force of the drive lever to return the drive lever from the fro- (or depressed, stepping down position of the pedal) to the to-direction or stepping up. In this way, an assisted return of the pedal can be achieved after the balance has been transferred to the other leg by the user.

Preferably, the transmission comprises an output shaft which is couplable to the input shaft in order to transmit drive power from the input shaft to the output shaft, wherein the transmission is configured as a summing gearbox such that drive power introduced into the input shaft - preferably by the both pulleys - and drive power introduced (directly or indirectly by means like a gear drive or electric motor like a hub motor) to the output shaft can be jointly transmitted to the at least one wheel in order to drive it. This can be used to couple additional auxiliary energy, e.g. from a drive motor, into the transmission or directly to the wheel if the drive motor is configured as a hub motor, so that the scooter becomes a hybrid vehicle.

Advantageously, the transmission comprises a two-way-overrunning clutch, whereby the two-way-overrunning clutch is such configured that in a first operating mode the two-way-overrunning clutch is engaged such that drive power can be transferred from the at least one drive lever to the input shaft and through the two-way-overrunning clutch to the output shaft, and in a second operating mode, in which the two-way-overrunning clutch is disengaged - and preferably no drive power is transferred from the at least one drive lever to the input shaft - no drive power is transmittable from the output shaft back to the input shaft, in both rotating directions of the output shaft. The two-way-overrunning clutch therefore ensures that the pulling means are not activated or operated (e.g. wound or coiled to the pulley) when driving downhill, coasting without operating the drive levers or pushing the scooter while walking alongside the scooter backwards or forwards, as in these situations the drive levers or pedals are not operated by the user. In other words, the two-way-overrunning clutch prevents a kick back of the drive levers in the to- and fro-direction when driving the scooter at fast speeds downhill or pushing it back or forth.

The two-way-overrunning clutch may be such configured that in the first operating mode it is engaged or engages when drive power or torque is applied to the input shaft - by the drive levers - and it is disengaged or disengages when the drive power or torque ceases. That means, that thanks to the two-way-overrunning clutch in its engaged mode, torque from the pulling means can be transferred to the at least one wheel to drive it and the two-way-overrunning clutch disengages when there is no power input through to the drive levers or pedals.

The two-way-overrunning clutch is thus such configured that the engaging and disengaging of the two-way-overrunning clutch is done completely mechanically, namely in dependence whether at least one of the drive levers is actuated (engaged clutch) or is not actuated (disengaged clutch). The two-way-overrunning clutch is instantly and autonomously engaged from a disengaged position (second operating mode) in which the scooter is coasting or running downhill or the user is pushing it backwards when the user actuates any drive lever. The reason for the two-way-overrunning clutch closing is that there is a torque on the input shaft, which is caused by an actuation of the at least one drive lever. Thus, the two-way-overrunning clutch is such configured that no auxiliary energy is required to operate the two-way-overrunning clutch, since it is self-engaging depending on a torque presence at the input shaft.

Further, the transmission comprises an intermediate shaft which is arranged as seen in the direction of drive power transmission between the input shaft and the output shaft, wherein the two-way-overrunning clutch is such configured that it can selectively couple the intermediate shaft to the output shaft.

The two-way-overrunning clutch may be such configured that in the first operating mode - in which drive power or torque is applied to the input shaft (as one of the drive levers is actuated) - the two-way-overrunning clutch is engaged, the intermediate shaft is coupled by the two-way-overrunning clutch to the output shaft and in the second operating mode - in which preferably no drive power or torque is applied to the input shaft - the two-way-overrunning clutch is disengaged, the output shaft is decoupled from the intermediate shaft by the two-way-overrunning clutch such that the two-way-overrunning clutch prevents a drive power transmission from the output shaft through the intermediate shaft to the input shaft. Preferably, the two-way-overrunning clutch may be arranged between the intermediate shaft and the output shaft. The two-way-overrunning clutch could be configured to be positioned either between the intermediate shaft and the input shaft, instead. Also, the two-way-overrunning clutch may be arranged on the intermediate shaft, preferably concentric to it. All in all, the use of the intermediate shaft and this special arrangement may provide for particularly a smaller installation space and thus for a compact design of the scooter. Within the first operating mode of the two-way-overrunning clutch, the freewheel clutch of the at least one drive lever may be engaged such that drive power may be transmitted from the drive lever to the input shaft.

In detail, the output shaft may comprise an input gear and an output gear, each fixedly mounted to the output shaft, the input shaft comprises an output gear fixedly mounted to the input shaft, which output gear of the input shaft meshes with an intermediate input gear on the intermediate shaft, which intermediate input gear is fixedly mounted to the intermediate shaft, the intermediate shaft further comprises an intermediate output gear which meshes with the input gear of the output shaft, wherein the two-way-overrunning clutch is arranged as seen in the direction of drive power transmission in between the intermediate shaft and the intermediate output gear and the two-way-overrunning clutch is such configured that in the first operating mode, in which the two-way-overrunning clutch is engaged, the intermediate output gear is coupled to the intermediate shaft by the two-way-overrunning clutch such that the intermediate input gear, the intermediate output gear and the intermediate shaft turn together in order to transmit drive power from the input shaft through the intermediate shaft to the output shaft, wherein in the second operating mode, in which the two-way-overrunning clutch is disengaged, the intermediate output gear is decoupled from the intermediate shaft by the two-way-overrunning clutch such that the intermediate output gear freewheels in respect to the intermediate shaft in order to prevent a transmission of drive power from the output shaft through the intermediate shaft to the input shaft, irrespective of the turning direction of the intermediate output gear.

Further, the intermediate output gear at least partially surrounds two-way-overrunning clutch in the circumferential direction. That means that at least a part of the two-way-overrunning clutch is arranged radially inside the intermediate output gear. Also, the two-way-overrunning clutch is concentric to the intermediate shaft and at least partially surrounds the intermediate shaft in circumferential direction. Such a transmission saves installation space and can reduce the overall mass of the scooter.

Further, the output shaft of the transmission may be couplable to a wheel shaft of the at least one wheel by means of a chain, belt or gear drive. Thereby, a drive motor may be associated with the transmission or the at least one wheel in order to transmit drive power from the drive motor to the at least one wheel in addition to or as an alternative to the drive levers, such that preferably the scooter is a hybrid vehicle. The drive motor may be an electric motor, which can be preferably powered by a rechargeable battery. Furthermore, the drive motor may be a hub motor, which is a part of the at least one wheel such that the hub motor drives the wheel. A hybrid vehicle can thus be specified and the corresponding drive motor can be easily connected to the transmission with regard to its power input, thereby saving installation space. Further, due to the summing gearbox, the drive lever can now be operated independently of the motor. This means that the vehicle can be used in the following three operating modes: 1. pure human drive via actuation of the at least one drive lever, 2. pure motor drive (without the actuation of the drive lever(s)) and 3. superimposed pure human and pure motor drive. Preferably, at least the input shaft, the intermediate shaft, the output shaft and the two-way-overrunning clutch as well as the respective gears may be at least partly arranged inside a common housing of the transmission, wherein preferably the drive motor is separate to the common housing. In this way, a particularly compact design of the transmission and therefore of the entire scooter can be achieved.

With the present invention a compact alternative to pedelecs or e-bikes can be obtained, with a new way of motion (stepper motion), whereby the scooter can be used both as commuter device and workout device, provides for independent operation of the both drive levers or pedals and has an extended range compared to standard pure electric scooters when the drive levers are seen as mechanical back up function in case the battery goes flat.

The advantages of the invention will now be illustrated in more detail with reference to a preferred embodiment and the figures, showing:
- Fig. 1: a schematic side view on a vehicle according to an embodiment of the present invention;
- Fig. 2: a schematic view on the main parts of a transmission and the drive train of the vehicle according to an embodiment of the present invention;
- Fig. 3: a schematic, spatial detail view on the pulley according to an embodiment of the present invention.

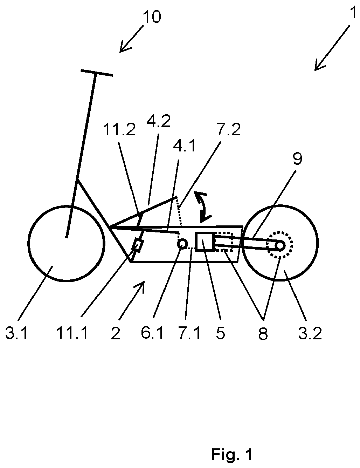

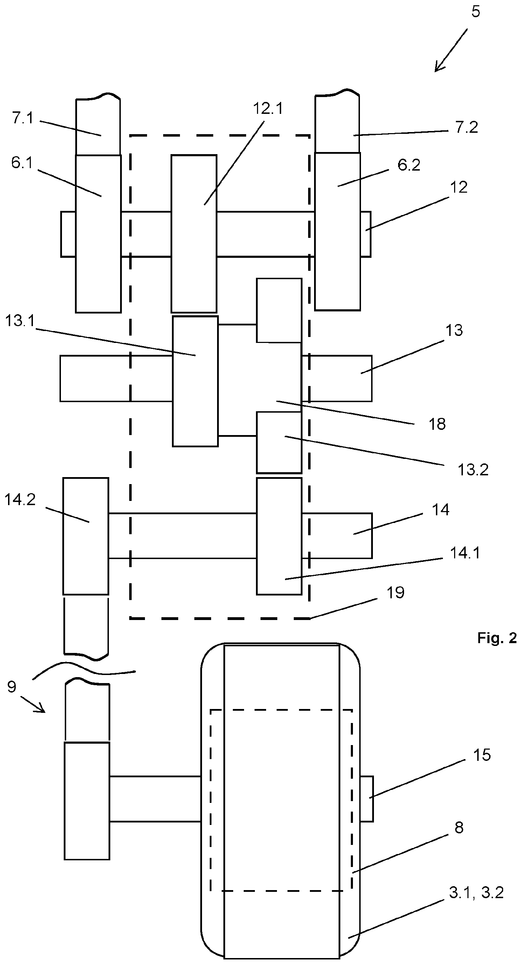

Fig. 1 discloses a schematic side view on a vehicle 1 according to an embodiment of the present invention. The vehicle 1 is as a scooter and comprises a frame 2 and at least two wheels 3.1, 3.2 rotatably mounted to the frame 2, e.g. the wheels 3.1, 3.2 rotating each around an axle or wheel shaft 15 (see Fig. 2) which may be supported by a respective bearing. This allows the vehicle 1 to roll with the help of the wheels 3.1, 3.2.

Further, two drive levers 4.1, 4.2 are arranged adjacent to each other, the drive levers 4.1, 4.2 being rotatably connected with their one end to the frame 2 such that the other end of the respective drive lever may perform a reciprocating to- and fro-movement around its one end, as indicated by the double arrow.

A transmission 5 is in mechanical, more precisely in rotational connection to one of the wheels 3.1, 3.2 in order to drive it rotationally. Here, this is wheel 3.2 which is driven by the transmission 5. The transmission 5 may be supported by or fixed to the frame 2.

To each drive lever 4.1, 4.2 a pulley 6.1, 6.2 (of which in Fig. 1 only one is shown) is associated, around which pulley 6.1, 6.2 a pulling means 7.1, 7.2 (see the dotted lines) like a rope, cable or belt is wound. Each pulling means 7.1, 7.2 in turn is connected with its respective drive lever 4.1, 4.2 and with the transmission 5. That means that to every drive lever 4.1, 4.2 each a single and independent pulley 6.1, 6.2 and a respective pulling means 7.1, 7.2 is associated. In this case, one end of each pulling means 7.1, 7.2 is connected to the respective drive lever 4.1, 4.2 and the other end to the pulley 6.1, 6.2 itself, wherein the pulley 6.1, 6.2 being connectable to an input shaft 12 (see Fig. 2) of the transmission 5.

As can also best be seen from Fig. 2, the transmission 5 further comprises an output shaft 14, which is here indirectly couplable to the wheel shaft 15 of the at least one wheel 3.1, 3.2 by means of a chain, belt or gear drive, here depicted with the reference number 9.

By actuating at least one of the drive levers 4.1, 4.2 - which in the present case are configured as pedals (see Fig. 1) - at least in the fro-direction, the movement of the drive lever 4.1, 4.2 being transmitted by its respective pulling means 7.1, 7.2 via its respective pulley 6.1, 6.2 to the transmission 5, more precisely to the input shaft 12 and within the transmission 5 being converted into a rotational movement of the at least one wheel, here wheel 3.2 in driving direction of the vehicle 1, thus propelling the vehicle 1 by depressing at least one of the pedals.

Once again: An actuation of the at least one drive lever 4.1, 4.2 by foot in the fro-direction, e.g. by stepping it down, causes a transferal of motion or moment of the drive lever 4.1, 4.2 by the respective pulling means 7.1, 7.2, the respective pulley 6.1, 6.2 and by the transmission 5 to the at least one wheel 3.2.

As indicated in Fig. 1 by the dashed lines, a drive motor 8 can be associated with the transmission 5 or the at least one wheel 3.2 in order to transmit drive power from the drive motor 8 to the at least one wheel 3.2 in addition to or as an alternative to the drive levers 4.1, 4.2, such that the vehicle 1 forms a hybrid vehicle. Thereby, the drive motor 8 may be an electric motor. The drive motor 8 may be coupled to the transmission 5 (see Fig. 1) or may be configured as a hub motor such that it drives the wheel 3.2 directly on the wheel shaft 15 as depicted also in Fig. 1 and 2.

In order to help the drive levers 4.1, 4.2 to return e.g. in a neutral position (for example back in the to-position), a return spring 11.1, 11.2 (see Fig. 1) may be associated to each drive lever 4.1, 4.2 independently, which return spring 11.1, 11.2 being connected with its one end to the frame 2 of the vehicle 1 and with its other end to its respective drive lever 4.1, 4.2 in order to ensure a restoring force of the drive lever to return the drive lever 4.1, 4.2 from the fro- (pedal depressed) to the to-direction (pedal restored form depression).

The vehicle 1 may further comprise a handlebar 10 for steering the at least one wheel 3.1, 3.2 of the vehicle 1, which handlebar 10 may include the shown steering rod and be supported to the frame 2 and configured such that it can swivel relative to it. A deck for resting the feet of the user of the vehicle 1 may be formed by the drive levers 4.1, 4.2 itself.

In the embodiment of Fig. 2, the transmission 5 comprises the input shaft 12, an intermediate shaft 13 and an output shaft 14.

Both pulleys 6.1, 6.2 are such configured, that the to- and fro-movement of the drive levers 4.1, 4.2 (see Fig. 1) is converted into rotational drive power of the input shaft 12. Therefore, the pulleys 6.1, 6.2 may be selectively connected to and disconnected from the input shaft 12. Each pulley 6.1, 6.2 being configured such that around its each outer circumference the respective pulling means 7.1, 7.2 may be wound or coiled.

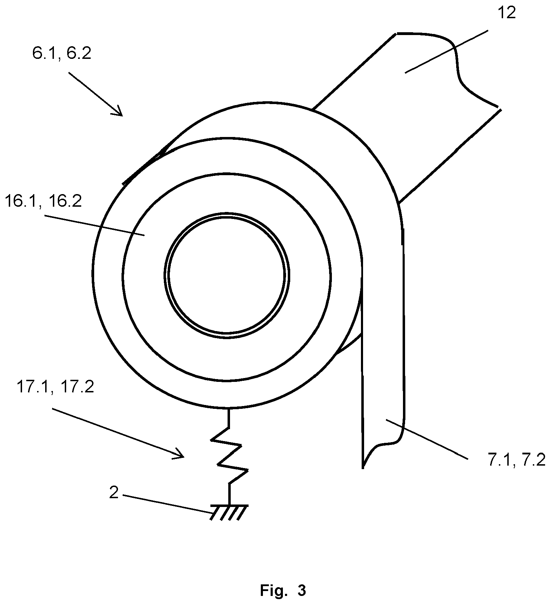

As can best be seen from Fig. 3, which shows a schematic, spatial detail view on one pulley 6.1, 6.2 according to another embodiment, each pulley 6.1, 6.2 is associated with a freewheel clutch 16.1, 16.2 and a retractor. The retractor comprising a return spring 17.1, 17.2, which is here is shown in a simplified way. One end of the retractor return spring 17.1, 17.2 may be fixedly connected to the pulley 6.1, 6.2 and the other end to the frame 2 of the vehicle.

The return spring 17.1, 17.2 of the retractor may be configured as a spiral spring. The axis of rotation of the return spiral spring 17.1, 17.2 may then be parallel to the axis of rotation of the input shaft 12, in other words, both the input shaft 12 and the retractor return spring 17.1, 17.2 may be concentric to each other. Spiral springs are metal strips wound in a plane in a worm line and thus strongly curved around its axis of rotation. The return spring 17.1, 17.2 and the freewheel clutch 16.1, 16.2 may be concentrically arranged to each other and to the pulley 6.1, 6.2. In other words, the pulley 6.1, 6.2 can accommodate especially the freewheel clutch 16.1, 16.2 in the circumferential direction. Thereby, the freewheel clutch 16.1, 16.2 is arranged in radial direction between the pulley 6.1, 6.2 and the input shaft 12.

Each pulley 6.1, 6.2 is thus connectable via its respective freewheel clutch 16.1, 16.2 to the input shaft 12 of the transmission 5. The retractor and the freewheel clutch 16.1, 16.2 are configured such that during the fro-movement of the respective drive lever 4.1, 4.2 (see Fig. 1), the pulling means 7.1, 7.2 can be un-wound or uncoiled from the respective pulley 6.1, 6.2, thereby tensioning the return spring 17.1, 17.2 of the retractor. Further, the freewheel clutch 16.1, 16.2 is engaged such that drive power from the drive lever 4.1, 4.2 may be transmitted by the pulling means 7.1, 7.2, the pulley 6.1, 6.2 and the engaged freewheel clutch 16.1, 16.2 to the input shaft 12 of the transmission 5. Thus, the uncoiling pulling means 7.1, 7.2 drives the pulley 6.1, 6.2 with the engaged freewheel clutch 16.1, 16.2 which in turn drives the input shaft 12.

Whereas, in an opposite direction, during a to-movement of the drive lever 4.1, 4.2 (e.g. a releasing of the pedal), which can be assisted by the drive lever return spring 11.1, 11.2 (see Fig. 1), the freewheel clutch 16.1, 16.2 is disengaged such that the pulley 6.1, 6.2 freewheels in respect to the input shaft 12. In this case, as long as none of the drive levers 4.1, 4.2 is operated, no drive power is transmitted from the pulley 6.1, 6.2 to the input shaft 12 and the pulling means 7.1, 7.2 being wound back around the pulley 6.1, 6.2 by the now loosening, pretensioned return spring 17.1, 17.2 of the retractor.

If the both drive levers 4.1, 4.2 shall be actuated independently from each other, each pulley 6.1, 6.2 may be coupled by the respective freewheel clutch 16.1, 16.2 to a respective end of the input shaft 12, as can best be seen from Fig. 2. Thus, drive power from pulley 6.1, from pulley 6.2 or from both pulleys 6.1, 6.2 may be transmitted to the input shaft 12.

As can best be seen from Fig. 2, all the shafts 12, 13 and 14 of the transmission 5 are arranged parallel to each other. Accordingly, drive power from the input shaft 12 may be transferred to the intermediate shaft 13 by gears meshing with each other. Therefore, the input shaft 12 comprises an output gear 12.1 fixedly mounted to the input shaft 12 and the intermediate shaft 13 comprises a respective intermediate input gear 13.1, which intermediate input gear 13.1 is fixedly mounted to the intermediate shaft 13 and meshing with the output gear 12.1 of the input shaft 12.

The intermediate shaft 13 further comprises an intermediate output gear 13.2 which meshes with an input gear 14.1 of the output shaft 14. Further, the output shaft 14 comprises an output gear 14.2, which as the input gear 14.1 is also fixedly mounted to the output shaft 14.

A two-way-overrunning clutch 18 is arranged as seen in the direction of drive power transmission from the input shaft 12 to the output shaft 14 in between the intermediate shaft 13 and the intermediate output gear 13.2 or between the both intermediate input and output gears 13.1, 13.2. The two-way-overrunning clutch 18 is such configured that in a first operating mode, in which the two-way-overrunning clutch 18 is engaged, the intermediate output gear 13.2 is coupled to the intermediate shaft 13 by the two-way-overrunning clutch 18 such that the intermediate input gear 13.1, the intermediate output gear 13.2 and the intermediate shaft 13 turn together in order to transmit drive power form the input shaft 12 through the intermediate shaft 13 to the output shaft 14.

Wherein in a second operating mode of the two-way-overrunning clutch 18, in which the two-way-overrunning clutch 18 is disengaged, the intermediate output gear 13.2 is decoupled from the intermediate shaft 13 by the two-way-overrunning clutch 18 such that the intermediate output gear 13.2 freewheels in respect to the intermediate shaft 13 in order to prevent a transmission of drive power in the reverse direction from the output shaft 14 through the intermediate shaft 13 to the input shaft 12, irrespective of the turning direction of the intermediate output gear 13.2. In other words, the two-way-overrunning clutch 18 interrupts the power transmission from the output shaft 14 back to the input shaft 12. This is done in order to prevent the input shaft 12 be driven and thus to prevent incorrect actuation of the pulleys 6.1, 6.2 and their retractors. One could say, that the two-way-overrunning clutch 18 is such configured that in the first operating mode it is engaged or engages when drive power or torque is applied to the input shaft 12 (by at least actuating one drive lever 4.1, 4.2) and it is disengaged or disengages when the drive power or torque ceases at the input shaft 12.

The intermediate output gear 13.2 at least partially surrounds the two-way-overrunning clutch 18 in the circumferential direction. Thus, the two-way-overrunning clutch 18 is arranged on the intermediate shaft 13, here concentric to it such that it surrounds the intermediate shaft at least partly in circumferential direction.

As disclosed in Fig. 2, the intermediate shaft 13 is arranged as seen in the direction of drive power transmission from the input shaft 12 to the output shaft 14 between the input shaft 12 and the output shaft 14. The two-way-overrunning clutch 18 is thereby such configured that it can selectively couple the intermediate shaft 13 to the output shaft 14. More specific, the two-way-overrunning clutch 18 is configured such that in the first operation mode, the intermediate output gear 13.2 is fixedly coupled to the intermediate shaft 13 via the two-way-overrunning clutch 18.

Wherein in the second operation mode, the output gear 13.2 is decoupled from the intermediate shaft 13. Thus, the two-way-overrunning clutch 18 ensures that the pulling means 7.1, 7.2 are not wound or coiled to the pulley 6.1, 6.2 when driving downhill without operating the drive levers 4.1, 4.2 or pushing the vehicle 1 backwards or forwards while walking the vehicle 1 alongside.

As disclosed, the transmission 5 is configured as a summing gearbox such that drive power introduced into the input shaft 12 e.g. by the both pulleys 6.1, 6.2 and drive power introduced in the output shaft 14 (e.g. by the drive motor 8) can be jointly transmitted to the at least one wheel 3.1, 3.2 in order to drive it. Therefore, the output shaft 14 is couplable to a wheel shaft 15 of the at least one wheel 3.1, 3.2 by means of the chain, belt or gear drive 9.

As depicted by the dashed lines, at least the input shaft 12, the intermediate shaft 13, the output shaft 14 and the two-way-overrunning clutch 18 as well as the respective gears 12.1, 13.1, 13.2 and 14.1 are at least partly arranged inside a common housing 19 of the transmission 5. Instead of a hub motor, the drive motor 8 could be separate to the wheel 3.1, 3.2 and could be also coupled to the common housing 19 or arranged inside it. The shaft ends of the shafts 13, 14 can also be configured such that they do not protrude from the common housing 19 to the outside, but are completely enclosed by it.

With the present invention, the user does not need to put down his leg to the ground in order to gain momentum while driving like this is the case in the known kick scooters. Thus, the scooter according to the present invention is suitable for users with balance problems, since their feet can stand on the drive levers during the whole drive. Even propelling the vehicle with one leg by depressing only one of the drive levers is possible. Such, also travelling longer distances with the scooter can be more comfortable, less tiring as compared to conventional kick scooters and safer in use due to the symmetrical stand of the user while propelling the scooter by the drive levers.

### Reference signs

- 1: vehicle
- 2: frame
- 3.1, 3.2: wheel
- 4.1, 4.2: drive lever
- 5: transmission
- 6.1, 6.2: pulley
- 7.1, 7.2: pulling means
- 8: drive motor
- 9: chain, belt or gear drive
- 10: handlebar
- 11.1, 11.2: drive lever return spring
- 12: input shaft
- 12.1: output gear of input shaft
- 13: intermediate shaft
- 13.1: input gear of intermediate shaft
- 13.2: output gear of intermediate shaft
- 14: output shaft
- 14.1: input gear of output shaft
- 14.2: output gear of output shaft
- 15: wheel shaft
- 16.1, 16.2: freewheel clutch
- 17.1, 17.2: retractor return spring
- 18: two-way-overrunning clutch
- 19: common housing

## Claims

1. Scooter, comprising
a frame (2),
at least two wheels (3.1, 3.2) rotatably mounted to the frame (2) and
two drive levers (4.1, 4.2) arranged adjacent to each other, the drive levers (4.1, 4.2) being rotatably connected with their one end to the frame such that the other end of the respective drive lever (4.1, 4.2) may perform a reciprocating to- and fro-movement around its one end,
a transmission (5) which is connected to the at least one wheel (3.1, 3.2) in order to drive it rotationally,
wherein a pulley (6.1, 6.2) is associated with each drive lever, around which pulley (6.1, 6.2) a pulling means (7.1, 7.2) like a rope, cable or belt is wound and which pulling means (7.1, 7.2) in turn is connected with the respective drive lever (4.1, 4.2) and with the transmission (5) such that by actuating at least one of the drive levers (4.1, 4.2) at least in the fro-direction, the movement of the drive lever (4.1, 4.2) being transmitted by its respective pulling means (7.1, 7.2) via its respective pulley (6.1, 6.2) to the transmission (5) and being converted into a rotational movement of the at least one wheel (3.1, 3.2) in driving direction of the scooter, **characterised in that** the transmission (5) comprises a two-way-overrunning clutch (18), whereby the two-way-overrunning clutch (18) is such configured that in a first operating mode the two-way-overrunning clutch (18) is engaged such that drive power can be transferred from the at least one drive lever (4.1, 4.2) to the input shaft (12) and through the two-way-overrunning clutch (18) to the output shaft (14), and in a second operating mode, in which the two-way-overrunning clutch (18) is disengaged - and preferably no drive power is transferred from the at least one drive lever (4.1, 4.2) to the input shaft (12) - no drive power is transmittable from the output shaft (14) back to the input shaft (12), in both rotating directions of the output shaft (14)..

2. Scooter according to claim 1, **characterised in that** one end of the pulling means (7.1, 7.2) is connected to the respective drive lever (4.1, 4.2) and the other end to the pulley (6.1, 6.2), the pulley (6.1, 6.2) being connectable to an input shaft (12) of the transmission (5).

3. Scooter according to claim 2, **characterised in that** each pulley (6.1, 6.2) being configured such that around each pulley (6.1, 6.2) the respective pulling means (7.1, 7.2) can be wound and each pulley (6.1, 6.2) being associated with a freewheel clutch (16.1, 16.2) and a retractor, the retractor comprising a return spring (17.1, 17.2), wherein each pulley (6.1, 6.2) being connectable via the respective freewheel clutch (16.1, 16.2) to an input shaft (12) of the transmission (5), the retractor and the freewheel clutch (16.1, 16.2) being configured such that during the fro-movement of the respective drive lever (4.1, 4.2), the pulling means (7.1, 7.2) can be unwound from the pulley (6.1, 6.2), thereby tensioning the return spring (17.1, 17.2) of the retractor and engaging the freewheel clutch (16.1, 16.2) such that drive power from the drive lever (4.1, 4.2) may be transmitted by the pulling means (7.1, 7.2), the pulley (6.1, 6.2) and the engaged freewheel clutch (16.1, 16.2) to the input shaft (12) of the transmission (5), wherein during a to-movement of the drive lever, the freewheel clutch (16.1, 16.2) being disengaged such that the pulley (6.1, 6.2) freewheels in respect to the input shaft (12) of the transmission (5) such that no drive power is transmitted from the pulley (6.1, 6.2) to the input shaft (12) and the pulling means (7.1, 7.2) being wound back around the pulley (6.1, 6.2) by the pretensioned return spring (17.1, 17.2) of the retractor.

4. Scooter according to claim 3, **characterised in that** each pulley (6.1, 6.2) is coupled by the respective freewheel clutch (16.1, 16.2) to a respective end of the input shaft (12) of the transmission (5) such that the both drive levers (4.1, 4.2) may be actuated independently from each other, wherein preferably the retractor, the freewheel clutch (16.1, 16.2) and the respective pulley (6.1, 6.2) are arranged concentrically to each other and to the input shaft (12).

5. Scooter according to one of the claims 1 to 4, **characterised in that** a drive lever return spring (11.1, 11.2) is associated to each drive lever (4.1, 4.2), which drive lever return spring is connected with its one end to the frame (2) of the scooter and with its other end to the drive lever (4.1, 4.2) in order to ensure a restoring force of the drive lever (4.1, 4.2) to return the drive lever (4.1, 4.2) from the fro- to the to-direction.

6. Scooter according to one of the claims 1 to 5, **characterised in that** the drive levers (4.1, 4.2) are configured as foot pedal levers such that by actuating the at least one drive lever (4.1, 4.2) by foot in the fro-direction, e.g. by stepping it down, the downward movement of the drive lever (4.1, 4.2) is transferred by the pulling means (7.1, 7.2), the pulley (6.1, 6.2) and the transmission (5) to the at least one wheel (3.1, 3.2) in order to drive it in driving direction of the scooter.

7. Scooter according to one of the claims 1 to 6, **characterised in that** the transmission (5) comprises the output shaft (14) which is couplable to the input shaft (12) in order to transmit drive power from the input shaft (12) to the output shaft (14), wherein the transmission (5) is configured as a summing gearbox such that drive power introduced into the input shaft (12) - preferably by the both pulleys (6.1, 6.2) - and drive power introduced in the output shaft (14) can be jointly transmitted to the at least one wheel (3.1, 3.2) in order to drive it.

8. Scooter according to claim1, **characterised in that** the two-way-overrunning clutch (18) is such configured that in the first operating mode it is engaged or engages when drive power or torque is applied to the input shaft (12) and it is disengaged or disengages when the drive power or torque ceases.

9. Scooter according to one of the claims 7 or 8, **characterised in that** the transmission (5) comprises an intermediate shaft (13) which is arranged as seen in the direction of drive power transmission (5) between the input shaft (12) and the output shaft (14), wherein the two-way-overrunning clutch (18) is such configured that it can selectively couple the intermediate shaft (13) to the output shaft (14).

10. Scooter according to claim 9, **characterised in that** the two-way-overrunning clutch (18) is such configured that in the first operating mode - in which drive power or torque is applied to the input shaft (12) - the two-way-overrunning clutch (18) is engaged, the intermediate shaft (13) is coupled by the two-way-overrunning clutch (18) to the output shaft (14) and in the second operating mode - in which preferably no drive power or torque is applied to the input shaft (12) - the two-way-overrunning clutch (18) is disengaged, the output shaft (14) is decoupled from the intermediate shaft (13) by the two-way-overrunning clutch (18) such that the two-way-overrunning clutch (18) prevents a drive power transmission (5) from the output shaft (14) through the intermediate shaft (13) to the input shaft (12).

11. Scooter according to claim 9 or 10, wherein the two-way-overrunning clutch (18) is arranged between the intermediate shaft (13) and the output shaft (14).

12. Scooter according to one of the claims 9 to 11, **characterised in that** the two-way-overrunning clutch (18) is arranged on the intermediate shaft (13), preferably concentric to it.

13. Scooter according to one of the claims 9 to 12, **characterised in that** the output shaft (14) comprises an input gear (14.1) and an output gear (14.2), each fixedly mounted to the output shaft (14), the input shaft (12) comprises an output gear (12.1) fixedly mounted to the input shaft (12), which output gear (12.1) of the input shaft (12) meshes with an intermediate input gear (13.1) of the intermediate shaft (13), which intermediate input gear (13.1) is fixedly mounted to the intermediate shaft (13), the intermediate shaft (13) further comprises an intermediate output gear (13.2) which meshes with the input gear (14.1) of the output shaft (14), wherein the two-way-overrunning clutch (18) is arranged as seen in the direction of drive power transmission (5) in between the intermediate shaft (13) and the intermediate output gear (13.2) and the two-way-overrunning clutch (18) is such configured that in the first operating mode, in which the two-way-overrunning clutch (18) is engaged, the intermediate output gear (13.2) is coupled to the intermediate shaft (13) by the two-way-overrunning clutch (18) such that the intermediate input gear (13.1), the intermediate output gear (13.2) and the intermediate shaft (13) turn together in order to transmit drive power form the input shaft (12) through the intermediate shaft (13) to the output shaft (14), wherein in the second operating mode, in which the two-way-overrunning clutch (18) is disengaged, the intermediate output gear (13.2) is decoupled from the intermediate shaft (13) by the two-way-overrunning clutch (18) such that the intermediate output gear (13.2) freewheels in respect to the intermediate shaft (13) in order to prevent a transmission (5) of drive power from the output shaft (14) through the intermediate shaft (13) to the input shaft (12), irrespective of the turning direction of the intermediate output gear (13.2).

14. Scooter according to claim 13, **characterised in that** the intermediate output gear (13.2) at least partially surrounds two-way-overrunning clutch (18) in the circumferential direction.

15. Scooter according to one of the claims 1 to 14, **characterised in that** the output shaft (14) of the transmission (5) is couplable to a wheel shaft (15) of the at least one wheel (3.1, 3.2) by means of a chain, belt or gear drive (9).

16. Scooter according to claim 1 to 15, **characterised in that** a drive motor (8) is associated with the transmission (5) or the at least one wheel (3.1, 3.2) in order to transmit drive power from the drive motor (8) to the at least one wheel (3.1, 3.2) in addition to or as an alternative to the drive levers (4.1, 4.2), such that preferably the scooter is a hybrid vehicle.

17. Scooter according to claim 16, **characterised in that** drive motor (8) is an electric motor.

18. Scooter according to claim 16 or 17, **characterised in that** the drive motor (8) is a hub motor, which is a part of the at least one wheel (3.1, 3.2) such that the hub motor drives the wheel (3.1, 3.2).

19. Scooter according to one of the claims 9 to 18, **characterised in that** at least the input shaft (12), the intermediate shaft (13), the output shaft (14) and the two-way-overrunning clutch (18) as well as the respective gears are at least partly arranged inside a common housing (19) of the transmission (5), wherein preferably the drive motor (8) is separate to the common housing (19).

## Patentansprüche

1. Scooter, bestehend aus
einem Rahmen (2),
mindestens zwei Rädern (3.1, 3.2), die drehbar und am Rahmen (2) montiert sind und
zwei nebeneinander angeordneten Antriebshebeln (4.1, 4.2), den Antriebshebeln (4.1, 4.2), die drehbar und mit ihrem einen Ende mit dem Rahmen verbunden sind, so dass das andere Ende des jeweiligen Antriebshebels (4.1, 4.2) eine wechselseitige Hin- und Her-Bewegung um sein eines Ende ausführen kann,
einem Getriebe (5), das mit mindestens einem Rad (3.1, 3.2) verbunden ist, um es in einer Drehbewegung anzutreiben,
wobei jedem Antriebshebel eine Riemenscheibe (6.1, 6.2) zugeordnet ist, rund um eine Riemenscheibe (6.1, 6.2) eine Zugvorrichtung (7.1, 7.2) wie ein Seil, Kabel oder Riemen gewickelt ist und die ihrerseits mit dem jeweiligen Antriebshebel (4.1, 4.2) und mit dem Getriebe (5) verbunden ist, so dass durch die Betätigung von mindestens einem der Antriebshebel (4.1, 4.2) zumindest in der Vorwärtsrichtung die Bewegung des Antriebshebels (4.1, 4.2) durch dessen jeweilige Zugvorrichtung (7.1, 7.2) über dessen jeweilige Riemenscheibe (6.1, 6.2) auf das Getriebe (5) übertragen und in eine Drehbewegung von mindestens einem Rad (3.1, 3.2) in Fahrtrichtung des Scooters umgesetzt wird, **dadurch gekennzeichnet, dass** das Getriebe (5) eine Zweiwege-Freilaufkupplung (18) aufweist, wobei die Zweiwege-Freilaufkupplung (18) so konfiguriert ist, dass in einem ersten Betriebsmodus die Zweiwege-Freilaufkupplung (18) so einkuppelt, dass die Antriebskraft vom mindestens einem Antriebshebel (4.1, 4.2) auf die Eingangswelle (12) und durch die Zweiwege-Freilaufkupplung (18) auf die Ausgangswelle (14) übertragen werden kann und in einem zweiten Betriebsmodus, in dem die Zweiwege-Freilaufkupplung (18) ausgekuppelt ist - und vorzugsweise keine Antriebskraft vom mindestens einem Antriebshebel (4.1, 4.2) auf die Eingangswelle (12) übertragen werden kann - in beiden Drehrichtungen der Ausgangswelle (14) keine Antriebskraft von der Ausgangswelle (14) zurück auf die Eingangswelle (12) übertragen werden kann.

2. Scooter gemäß Anspruch 1, **dadurch gekennzeichnet, dass** das eine Ende der Zugvorrichtung (7.1, 7.2) mit dem jeweiligen Antriebshebel (4.1, 4.2) und das andere Ende mit der Riemenscheibe (6.1, 6.2) verbunden ist, wobei die Riemenscheibe (6.1, 6.2) mit einer Eingangswelle (12) des Getriebes (5) zuschaltbar ist.

3. Scooter gemäß Anspruch 2, **dadurch gekennzeichnet, dass** jede Riemenscheibe (6.1, 6.2) so konfiguriert ist, dass um jede Riemenscheibe (6.1, 6.2) die jeweilige Zugvorrichtung (7.1, 7.2) gewickelt werden kann und jeder Riemenscheibe (6.1, 6.2) eine Freilaufkupplung (16.1, 16.2), eine Rückholfeder (17.1, 17.2) und eine Aufziehvorrichtung zugeordnet sind, wobei die Aufziehvorrichtung eine Rückholfeder (17.1, 17.2) aufweist, **dadurch gekennzeichnet, dass** jede Riemenscheibe (6.1, 6.2) über die jeweilige Freilaufkupplung (16.1, 16.2) mit einer Eingangswelle (12) des Getriebes (5) zuschaltbar ist, wobei die Aufziehvorrichtung und die Freilaufkupplung (16.1, 16.2) so konfiguriert sind, dass während der Hin- und Her-Bewegung des jeweiligen Antriebshebels (4. 1, 4.2) die Zugvorrichtung (7.1, 7.2) von der Riemenscheibe (6.1, 6.2) abgewickelt werden kann, wodurch die Rückholfeder (17.1, 17.2) der Aufziehvorrichtung gespannt und die Freilaufkupplung (16.1, 16.2) eingekuppelt wird, so dass die Antriebskraft vom Antriebshebel (4.1, 4.2) über die Zugvorrichtung (7.1, 7.2), die Riemenscheibe (6.1, 6.2) und die eingekuppelte Freilaufkupplung (16.1, 16.2) auf die Eingangswelle (12) des Getriebes (5) übertragen werden kann, wobei bei einer HinBewegung des Antriebshebels die Freilaufkupplung (16.1, 16.2) so ausgekuppelt wird, dass die Riemenscheibe (6.1, 6.2) in Bezug auf die Eingangswelle (12) des Getriebes (5) im Freilauf läuft, wodurch von der Riemenscheibe (6.1, 6.2) keine Antriebskraft auf die Eingangswelle (12) übertragen wird und die Zugvorrichtung (7.1, 7.2) durch die vorgespannte Rückholfeder (17.1, 17.2) der Aufziehvorrichtung wieder um die Riemenscheibe (6.1, 6.2) herum gewickelt wird.

4. Scooter gemäß Anspruch 3, **dadurch gekennzeichnet, dass** jede Riemenscheibe (6.1, 6.2) durch die entsprechende Freilaufkupplung (16.1, 16.2) an ein jeweiliges Ende der Eingangswelle (12) des Getriebes (5) gekoppelt ist, so dass die beiden Antriebshebel (4.1, 4.2) unabhängig voneinander betätigt werden können, wobei vorzugsweise die Aufziehvorrichtung, die Freilaufkupplung (16.1, 16.2) und die jeweilige Riemenscheibe (6.1, 6.2) konzentrisch zueinander und zur Eingangswelle (12) angeordnet sind.

5. Scooter gemäß einem der Ansprüche 1 bis 4, **dadurch gekennzeichnet, dass** jedem Antriebshebel (4.1, 4.2) eine Rückholfeder (11.1, 11.2) zugeordnet ist, die mit ihrem einen Ende mit dem Rahmen (2) des Scooters und mit ihrem anderen Ende mit dem Antriebshebel (4.1, 4.2) verbunden ist, um eine Rückstellkraft des Antriebshebels (4.1, 4.2) zu gewährleisten, durch die der Antriebshebel (4.1, 4.2) von der Hin- und Herrichtung zurückgestellt werden kann.

6. Scooter gemäß einem der Ansprüche 1 bis 5, **dadurch gekennzeichnet, dass** die Antriebshebel (4.1,4.2) so als Fußpedal konfiguriert sind, dass durch Betätigung von mindestens einem Antriebshebel (4.1, 4.2) mit dem Fuß in Vorwärtsrichtung, z. B. durch Niedertreten, die Abwärtsbewegung des Antriebshebels (4.1, 4.2) durch die Zugvorrichtung (7.1, 7.2), die Riemenscheibe (6.1, 6.2) und das Getriebe (5) auf mindestens eine Rad (3.1, 3.2) übertragen wird, um dieses in Fahrtrichtung des Scooters anzutreiben.

7. Scooter gemäß einem der Ansprüche 1 bis 6, **dadurch gekennzeichnet, dass** das Getriebe (5)
aus der
Ausgangswelle (14) besteht, die mit der Eingangswelle (12) gekoppelt werden kann, um die Antriebskraft von der Eingangswelle (12) zur Ausgangswelle (14) zu übertragen, wobei das Getriebe (5) als summierendes Getriebe konfiguriert ist, so dass die Antriebskraft, die von der Eingangswelle (12) eingebracht wird - vorzugsweise durch die beiden Riemenscheiben (6.1, 6.2) - und die in die Ausgangswelle (14) eingebrachte Antriebskraft gemeinsam auf mindestens ein Rad (3.1, 3.2) übertragen werden kann, um dieses anzutreiben.

8. Scooter gemäß Anspruch 1, **dadurch gekennzeichnet, dass** die Zweiwege-Freilaufkupplung (18) so konfiguriert ist, dass sie in der ersten Betriebsart eingekuppelt ist oder einkuppelt, wenn die Antriebskraft oder das Drehmoment auf die Eingangswelle (12) angelegt ist, und dass sie ausgekuppelt ist oder auskuppelt, wenn die Antriebskraft oder das Drehmoment wegfällt.

9. Scooter gemäß einem der Ansprüche 7 bis 8, **dadurch gekennzeichnet, dass** das Getriebe (5) eine Zwischenwelle (13) aufweist, die wie gesehen in Richtung der Antriebskraftübertragung (5) zwischen der Eingangswelle (12) und der Ausgangswelle (14) angeordnet ist, wobei die Zweiwege-Freilaufkupplung (18) so konfiguriert ist, dass sie die Zwischenwelle (13) selektiv mit der Ausgangswelle (14) koppeln kann.

10. Scooter gemäß Anspruch 9, **dadurch gekennzeichnet, dass** die Zweiwege-Freilaufkupplung (18) so konfiguriert ist, dass in der ersten Betriebsart - in der die Antriebskraft oder das Drehmoment an der Eingangswelle (12) anliegt - die Zweiweg-Freilaufkupplung (18) eingekuppelt ist, die Zwischenwelle (13) durch die Zweiweg-Freilaufkupplung (18) mit der Abtriebswelle (14) gekoppelt ist und in der zweiten Betriebsart - in der vorzugsweise keine Antriebskraft oder kein Drehmoment an der Eingangswelle (12) anliegt - die Zweiwege-Freilaufkupplung (18) ausgekuppelt ist, die Ausgangswelle (14) von der Zwischenwelle (13) durch die Zweiwege-Freilaufkupplung (18) ausgekuppelt ist, so dass die Zweiwege-Freilaufkupplung (18) eine Antriebskraftübertragung (5) von der Ausgangswelle (14) über die Zwischenwelle (13) auf die Eingangswelle (12) verhindert.

11. Scooter gemäß Anspruch 9 oder 10, wobei die Zweiwege-Freilaufkupplung (18) zwischen der Zwischenwelle (13) und der Abtriebswelle (14) angeordnet ist.

12. Scooter gemäß einem der Ansprüche 9 bis 11, **dadurch gekennzeichnet, dass** die Zweiwege-Freilaufkupplung (18) auf der Zwischenwelle (13) vorzugsweise konzentrisch zu dieser angeordnet ist.

13. Scooter gemäß einem der Ansprüche 9 bis 12, **dadurch gekennzeichnet, dass** die Ausgangswelle (14) ein Antriebszahnrad (14.1) und ein Abtriebszahnrad (14.2) aufweist, die jeweils fest an der Ausgangswelle (14) angebracht sind, das Antriebszahnrad (12) ein fest an der Eingangswelle (12) angebrachtes Abtriebszahnrad (12.1) aufweist, dessen Abtriebszahnrad (12.1) der Eingangswelle (12) mit einem dazwischenliegenden Antriebszahnrad (13.1) der Zwischenwelle (13) verzahnt ist, dessen dazwischenliegendes Antriebszahnrad (13.1) fest an der Zwischenwelle (13) angebracht ist, die Zwischenwelle (13) weiterhin ein dazwischenliegendes Abtriebszahnrad (13.2) aufweist, das mit dem Antriebszahnrad (14.1) der Ausgangswelle (14) verzahnt ist, wobei die Zweiwege-Freilaufkupplung (18) wie in der Abbildung gezeigt in der Richtung der Antriebskraftübertragung (5) zwischen der Zwischenwelle (13) und dem dazwischenliegenden Abtriebszahnrad (13.2) und der Zweiwege-Freilaufkupplung (18) so konfiguriert ist, dass in der ersten Betriebsart, in der die Zweiwege-Freilaufkupplung (18) eingekuppelt ist, das dazwischenliegende Abtriebszahnrad (13.2) durch die Zweiwege-Freilaufkupplung (18) mit der Zwischenwelle (13) gekoppelt ist, so dass das dazwischenliegende Antriebszahnrad (13.1), das dazwischenliegende Abtriebszahnrad (13.2) und die Zwischenwelle (13) sich gemeinsam drehen, um die Antriebskraft von der Eingangswelle (12) über die Zwischenwelle (13) auf die Ausgangswelle (14) zu übertragen, wobei in der zweiten Betriebsart, in der die Zweiwege-Freilaufkupplung (18) ausgekuppelt ist, das dazwischenliegende Abtriebszahnrad (13.2) von der Zwischenwelle (13) durch die Zweiwege-Freilaufkupplung (18) entkoppelt ist, so dass das dazwischenliegende Abtriebszahnrad (13.2) in Bezug auf die Zwischenwelle (13) freiläuft, um eine Übertragung (5) der Antriebskraft von der Ausgangswelle (14) über die Zwischenwelle (13) auf die Eingangswelle (12) unabhängig von der Drehrichtung des dazwischenliegenden Abtriebszahnrads (13.2) zu verhindern.

14. Scooter gemäß Anspruch 13, **dadurch gekennzeichnet, dass** das dazwischenliegende Abtriebszahnrad (13.2) die Zweiwege-Freilaufkupplung (18) in Umfangsrichtung zumindest teilweise umgibt.

15. Scooter gemäß einem der Ansprüche 1 bis 14, **dadurch gekennzeichnet, dass** die Ausgangswelle (14) des Getriebes (5) durch einen Ketten-, Riemen- oder Zahnradantrieb (9) mit einer Radwelle (15) von mindestens einem Rad (3.1, 3.2) gekoppelt werden kann.

16. Scooter gemäß einem der Ansprüche 1 bis 15, **dadurch gekennzeichnet, dass** dem Getriebe (5) oder wenigstens einem Rad (3.1, 3.2) ein Antriebsmotor (8) zugeordnet ist, um zusätzlich oder alternativ zu den Antriebshebeln (4.1, 4.2) Antriebskraft vom Antriebsmotor (8) auf mindestens ein Rad (3.1, 3.2) zu übertragen, so dass der Scooter vorzugsweise ein Hybridfahrzeug ist.

17. Scooter gemäß Anspruch 16, **dadurch gekennzeichnet, dass** der Antriebsmotor (8) ein Elektromotor ist.

18. Scooter gemäß Anspruch 16 oder 17, **dadurch gekennzeichnet, dass** der Antriebsmotor (8) ein Nabenmotor und Teil von mindestens einem Rad (3.1, 3.2) ist, so dass der Nabenmotor das Rad (3.1, 3.2) antreibt.

19. Scooter gemäß einem der Ansprüche 9 bis 18, **dadurch gekennzeichnet, dass** zumindest die Eingangswelle (12), die Zwischenwelle (13), die Ausgangswelle (14) und die Zweiwege-Freilaufkupplung (18) sowie die jeweiligen Zahnräder zumindest teilweise in einem gemeinsamen Gehäuse (19) des Getriebes (5) angeordnet sind, wobei der Antriebsmotor (8) vorzugsweise vom Getriebegehäuse (19) getrennt ist.

## Revendications

1. Scooter, comprenant
un châssis (2),
au moins deux roues (3.1, 3.2) montées de manière rotative sur le châssis (2) et
deux leviers d'entraînement (4.1, 4.2) disposés de manière adjacente l'un à l'autre, les leviers d'entraînement (4.1, 4.2) étant reliés de manière rotative par une de leurs extrémités au châssis de telle sorte que l'autre extrémité du levier d'entraînement respectif (4.1, 4.2) puisse effectuer un mouvement de va-et-vient alternatif autour de l'une de ses extrémités,
une transmission (5) qui est reliée à la ou aux roues (3.1, 3.2) afin de les entraîner en rotation,
dans lequel une poulie (6.1, 6.2) est associée à chaque levier d'entraînement, autour de ladite poulie (6.1, 6.2) un moyen de traction (7.1, 7.2) tel qu'une corde, un câble ou une courroie est enroulé et ledit moyen de traction (7.1, 7.2) est à son tour relié au levier d'entraînement respectif (4.1, 4.2) et à la transmission (5) de telle sorte qu'en actionnant au moins un des leviers d'entraînement (4.1, 4.2) au moins dans la direction arrière, le mouvement du levier d'entraînement (4.1, 4.2) étant transmis par son moyen de traction respectif (7.1, 7.2) via sa poulie respective (6.1, 6.2) à la transmission (5) et étant converti en un mouvement de rotation de la ou des roues (3.1, 3.2) dans la direction de déplacement du scooter, **caractérisé en ce que** la transmission (5) comprend un embrayage à roue libre à deux voies (18), dans lequel l'embrayage à roue libre à deux voies (18) est configuré de telle sorte que dans un premier mode de fonctionnement, l'embrayage à roue libre à deux voies (18) est enclenché de telle sorte que la puissance d'entraînement peut être transmise du ou des leviers d'entraînement (4.1, 4.2) à l'arbre d'entrée (12) et à travers l'embrayage à roue libre à deux voies (18) à l'arbre de sortie (14), et dans un deuxième mode de fonctionnement, dans lequel l'embrayage à roue libre à deux voies (18) est désenclenché - et de préférence aucune puissance d'entraînement n'est transmise du ou des leviers d'entraînement (4.1, 4.2) à l'arbre d'entrée (12) - aucune puissance d'entraînement n'est transmise de l'arbre de sortie (14) à l'arbre d'entrée (12), dans les deux directions de rotation de l'arbre de sortie (14).

2. Scooter selon la revendication 1, **caractérisé en ce qu'**une extrémité du moyen de traction (7.1, 7.2) est reliée au levier d'entraînement respectif (4.1, 4.2) et l'autre extrémité à la poulie (6.1, 6.2), la poulie (6.1, 6.2) pouvant être reliée à un arbre d'entrée (12) de la transmission (5).

3. Scooter selon la revendication 2, **caractérisé en ce que** chaque poulie (6.1, 6.2) est configurée de telle sorte qu'autour de chaque poulie (6.1, 6.2) le moyen de traction respectif (7.1, 7.2) peut être enroulé et chaque poulie (6.1, 6.2) étant associée à un embrayage à roue libre (16.1, 16.2) et à un enrouleur, l'enrouleur comprenant un ressort de rappel (17.1, 17.2), dans lequel chaque poulie (6.1, 6.2) pouvant être reliée via l'embrayage à roue libre respectif (16.1, 16.2) à un arbre d'entrée (12) de la transmission (5), l'enrouleur et l'embrayage à roue libre (16.1, 16.2) étant configurés de telle sorte que pendant le mouvement de va-et-vient du levier d'entraînement respectif (4.1, 4.2), le moyen de traction (7.1, 7.2) peut être déroulé de la poulie (6.1, 6.2), tendant ainsi le ressort de rappel (17.1, 17.2) de l'enrouleur et engageant l'embrayage à roue libre (16.1, 16.2) de telle sorte que la puissance d'entraînement du levier d'entraînement (4.1, 4.2) peut être transmise par le moyen de traction (7.1, 7.2), la poulie (6.1, 6.2) et l'embrayage à roue libre engagé (16.1, 16.2) à l'arbre d'entrée (12) de la transmission (5), dans lequel lors d'un mouvement vers l'avant du levier d'entraînement, l'embrayage à roue libre (16.1, 16.2) étant désengagé de telle sorte que la poulie (6.1, 6.2) tourne en roue libre par rapport à l'arbre d'entrée (12) de la transmission (5) de telle sorte qu'aucune puissance d'entraînement n'est transmise de la poulie (6.1, 6.2) à l'arbre d'entrée (12) et le moyen de traction (7.1, 7.2) est enroulé autour de la poulie (6.1, 6.2) par le ressort de rotation précontraint (17.1, 17.2) de l'enrouleur.

4. Scooter selon la revendication 3, **caractérisé en ce que** chaque poulie (6.1, 6.2) est couplée par l'embrayage à roue libre respectif (16.1, 16.2) à une extrémité respective de l'arbre d'entrée (12) de la transmission (5) de telle sorte que les deux leviers d'entraînement (4.1, 4.2) peuvent être actionnés indépendamment l'un de l'autre, dans lequel l'enrouleur, l'embrayage à roue libre (16.1, 16.2) et la poulie respective (6.1, 6.2) sont de préférence disposés concentriquement l'un par rapport à l'autre et par rapport à l'arbre d'entrée (12).

5. Scooter selon l'une des revendications 1 à 4, **caractérisé en ce qu'**un ressort de rappel de levier d'entraînement (11.1, 11.2) est associé à chaque levier d'entraînement (4.1, 4.2), ce ressort de rappel de levier d'entraînement est relié par une de ses extrémités au châssis (2) du scooter et par son autre extrémité au levier d'entraînement (4.1, 4.2) afin de garantir une force de rappel du levier d'entraînement (4.1, 4.2) pour ramener le levier d'entraînement (4.1, 4.2) de la direction arrière à la direction avant.

6. Scooter selon l'une des revendications 1 à 5, **caractérisé en ce que** les leviers d'entraînement (4.1,4.2) sont configurés comme des leviers à pédale de telle sorte qu'en actionnant le ou les leviers d'entraînement (4.1, 4.2) avec le pied dans la direction arrière, par ex. en appuyant dessus, le mouvement vers le bas du levier d'entraînement (4.1, 4.2) est transmis par le moyen de traction (7.1, 7.2), la poulie (6.1, 6.2) et la transmission (5) à la ou aux roues (3.1, 3.2) pour entraîner celles-ci dans la direction de déplacement du scooter.

7. Scooter selon l'une des revendications 1 à 6, **caractérisé en ce que** la transmission (5) comprend un arbre de sortie (14) qui est couplé à l'arbre d'entrée (12) afin de transmettre la puissance d'entraînement de l'arbre d'entrée (12) à l'arbre de sortie (14), dans lequel la transmission (5) est configurée comme une boîte de sommation de telle sorte que la puissance d'entraînement introduite dans l'arbre d'entrée (12) - de préférence par les deux poulies (6.1, 6.2) - et la puissance d'entraînement introduite dans l'arbre de sortie (14) peuvent être transmises conjointement à la ou aux roues (3.1, 3.2) de manière à les entraîner.

8. Scooter selon la revendication 1, **caractérisé en ce que** l'embrayage à roue libre à deux voies (18) est configuré de telle sorte que dans le premier mode de fonctionnement, il est enclenché ou s'enclenche lorsque la puissance d'entraînement ou le couple est appliqué à l'arbre d'entrée (12) et il est désenclenché ou se désenclenche lorsque la puissance d'entraînement ou le couple cesse.

9. Scooter selon l'une des revendications 7 ou 8, **caractérisé en ce que** la transmission (5) comprend un arbre intermédiaire (13) qui est disposé, comme on le voit, dans la direction de la transmission de puissance d'entraînement (5) entre l'arbre d'entrée (12) et l'arbre de sortie (14), dans lequel l'embrayage à roue libre à deux voies (18) est configuré de telle sorte qu'il peut coupler sélectivement l'arbre intermédiaire (13) à l'arbre de sortie (14).

10. Scooter selon la revendication 9, **caractérisé en ce que** l'embrayage à roue libre à deux voies (18) est configuré de telle sorte que dans le premier mode de fonctionnement - dans lequel une puissance d'entraînement ou un couple est appliqué à l'arbre d'entrée (12) - l'embrayage à roue libre à deux voies (18) est enclenché, l'arbre intermédiaire (13) est couplé par l'embrayage à roue libre à deux voies (18) à l'arbre de sortie (14) et dans le deuxième mode de fonctionnement - dans lequel de préférence aucune puissance d'entraînement ou couple n'est appliqué à l'arbre d'entrée (12) - l'embrayage à roue libre à deux voies (18) est désenclenché, l'arbre de sortie (14) est découplé de l'arbre intermédiaire (13) par l'embrayage à roue libre à deux voies (18) de telle sorte que l'embrayage à roue libre à deux voies (18) empêche une transmission de puissance d'entraînement (5) de l'arbre de sortie (14) à l'arbre d'entrée (12) à travers l'arbre intermédiaire (13).

11. Scooter selon la revendication 9 ou 10, dans lequel l'embrayage à roue libre à deux voies (18) est disposé entre l'arbre intermédiaire (13) et l'arbre de sortie (14).

12. Scooter selon l'une des revendications 9 à 11, **caractérisé en ce que** l'embrayage à roue libre à deux voies (18) est disposé sur l'arbre intermédiaire (13), de préférence concentriquement à celui-ci.

13. Scooter selon l'une des revendications 9 à 12, **caractérisé en ce que** l'arbre de sortie (14) comprend un engrenage d'entrée (14.1) et un engrenage de sortie (14.2), chacun monté de manière fixe sur l'arbre de sortie (14), l'arbre d'entrée (12) comprend un engrenage de sortie (12.1) monté de manière fixe sur l'arbre d'entrée (12), ledit engrenage de sortie (12.1) de l'arbre d'entrée (12) s'engrène avec un engrenage d'entrée intermédiaire (13.1) de l'arbre intermédiaire (13), ledit l'engrenage d'entrée intermédiaire (13.1) est monté de manière fixe sur l'arbre intermédiaire (13), l'arbre intermédiaire (13) comprend en outre un engrenage de sortie intermédiaire (13.2) qui s'engrène avec l'engrenage d'entrée (14.1) de l'arbre de sortie (14), dans lequel l'embrayage à roue libre à deux voies (18) est disposé, comme on le voit, dans la direction de la transmission de puissance d'entraînement (5) entre l'arbre intermédiaire (13) et l'engrenage de sortie intermédiaire (13.2) et l'embrayage à roue libre à deux voies (18) est configuré de telle sorte que dans le premier mode de fonctionnement, dans lequel l'embrayage à roue libre à deux voies (18) est enclenché, l'engrenage de sortie intermédiaire (13.2) est couplé à l'arbre intermédiaire (13) par l'embrayage à roue libre à deux voies (18) de telle sorte que l'engrenage d'entrée intermédiaire (13.1), l'engrenage de sortie intermédiaire (13.2) et l'arbre intermédiaire (13) tournent ensemble afin de transmettre la puissance d'entraînement de l'arbre d'entrée (12) à travers l'arbre intermédiaire (13) à l'arbre de sortie (14), dans lequel dans le deuxième mode de fonctionnement, dans lequel l'embrayage à roue libre à deux voies (18) est désenclenché, l'engrenage de sortie intermédiaire (13.2) est découplé de l'arbre intermédiaire (13) par l'embrayage à roue libre à deux voies (18) de telle sorte que l'engrenage de sortie intermédiaire (13.2) tourne en roue libre par rapport à l'arbre intermédiaire (13) afin d'empêcher une transmission (5) de puissance d'entraînement de l'arbre de sortie (14) à travers l'arbre intermédiaire (13) à l'arbre d'entrée (12), indépendamment de la direction de rotation de l'engrenage de sortie intermédiaire (13.2).

14. Scooter selon la revendication 13, **caractérisé en ce que** l'engrenage de sortie intermédiaire (13.2) entoure au moins partiellement l'embrayage à roue libre à deux voies (18) dans la direction circonférentielle.

15. Scooter selon l'une des revendications 1 à 14, **caractérisé en ce que** l'arbre de sortie (14) de la transmission (5) peut être couplé à un arbre de roue (15) de la ou des roues (3.1, 3.2) au moyen d'une transmission par chaîne, par courroie ou par engrenage (9).

16. Scooter selon les revendications 1 à 15, **caractérisé en ce qu'**un moteur d'entraînement (8) est associé à la transmission (5) ou à la ou aux roues (3.1, 3.2) afin de transmettre la puissance d'entraînement du moteur d'entraînement (8) à la ou aux roues (3.1, 3.2) en plus ou en alternative aux leviers d'entraînement (4.1, 4.2), de sorte que le scooter est de préférence un véhicule hybride.

17. Scooter selon la revendication 16, **caractérisé en ce que** le moteur d'entraînement (8) est un moteur électrique.

18. Scooter selon la revendication 16 ou 17, **caractérisé en ce que** le moteur d'entraînement (8) est un moteur de moyeu, qui fait partie de la ou des roues (3.1, 3.2) de telle sorte que le moteur de moyeu entraîne la roue (3.1, 3.2).

19. Scooter selon l'une des revendications 9 à 18, **caractérisé en ce qu'**au moins l'arbre d'entrée (12), l'arbre intermédiaire (13), l'arbre de sortie (14) et l'embrayage à roue libre à deux voies (18) ainsi que les engrenages respectifs sont au moins partiellement disposés à l'intérieur d'un carter commun (19) de la transmission (5), dans lequel le moteur d'entraînement (8) est de préférence séparé du carter commun (19).
